# FASCICULE DE BREVET EUROPEEN

(11) **EP 2 459 390 B1**
(45) Date de publication et mention de la délivrance du brevet: **07.09.2016**
(21) Numéro de dépôt: 10752871.3
(22) Date de dépôt: 27.07.2010
(51) Int. Cl.: B44C 1/16, B44C 1/18, B44C 1/28, B44C 5/00

(54) **SYSTÈME POUR APPOSER UN MOTIF SUR UN SUBSTRAT ET PROCÉDÉ CORRESPONDANT**
SYSTEM ZUM ANBRINGEN EINES MUSTERS AUF EINEM SUBSTRAT UND ENTSPRECHENDES VERFAHREN
SYSTEM FOR AFFIXING A PATTERN ONTO A SUBSTRATE, AND CORRESPONDING METHOD

(30) Priorité: 29.07.2009 FR 0955324
(43) Date de publication de la demande: 06.06.2012
(73) Titulaire: SGD Parfumerie France, 92800 Puteaux (FR)
(72) Inventeur: BAUVIN, Antoine, Emile, André, Marie, F-80132 Quesnoy Le Montant (FR); WAGNER, Christophe, Jean, F-76370 Neuville Les Dieppe (FR)
(74) Mandataire: Weber, Jean-François
(86) Numéro de dépôt international: PCT/FR2010/051582
(87) Numéro de publication internationale: WO 2011/015765

(56) Documents cités:
- EP-A1- 0 827 128
- US-A- 3 803 729
- US-A- 4 364 184
- US-A- 5 458 715
- US-A- 6 080 465
- US-A1- 2006 188 668

## Description

La présente invention se rapporte au domaine technique et général du dépôt d'éléments décoratifs et/ou fonctionnels sur un substrat, et en particulier de la décoration des flacons en verre par transfert sur ce dernier de motifs, et en particulier de motifs qui sont eux-mêmes en verre.

La présente invention concerne un système pour apposer un motif en une place prédéterminée unique sur un substrat, ledit système comprenant d'une part un moyen de transfert auquel est attaché de façon amovible ledit motif et d'autre part un moyen de pressage pour presser contre le substrat le moyen de transfert et le motif attaché à ce dernier.

La présente invention concerne également un procédé de fabrication d'un substrat sur lequel est apposé un motif en une place prédéterminée unique, ledit procédé comprenant d'une part une étape de réalisation ou de fourniture d'un moyen de transfert auquel est attaché de façon amovible ledit motif, et d'autre part une étape de pressage, contre le substrat, du moyen de transfert et du motif attaché à ce dernier, ladite étape de pressage étant effectuée à l'aide d'un moyen de pressage.

La présente invention concerne enfin un sous-ensemble de transfert pour apposer un motif sur un substrat, ledit sous-ensemble de transfert comprenant un moyen de transfert auquel est attaché de façon amovible ledit motif.

Il est connu d'appliquer des motifs décoratifs sur des substrats par transfert. Un tel procédé de transfert met généralement en oeuvre un film de transfert sur lequel le motif à appliquer est attaché de façon amovible par l'une de ses faces, par exemple à l'aide d'une substance adhésive. Une autre face du motif est quant à elle enduite par une couche adhésive activable, par exemple une couche de colle thermo-fusible. Le film de transfert et le motif qui lui est attaché sont destinés à être pressés contre la surface du substrat à décorer, en présence d'un apport de chaleur qui active la colle thermofusible. Le motif est ainsi collé sur le substrat, et il ne reste plus ensuite qu'à arracher le film de transfert pour obtenir un objet fini, constitué par le substrat revêtu du motif.

Ce procédé classique donne généralement satisfaction, mais n'en présente pas moins certains inconvénients sérieux, en particulier lorsqu'il est mis en oeuvre dans un contexte industriel, et tout particulièrement dans le cadre de la fabrication d'articles de luxe.

Ainsi, la mise en oeuvre des procédés de transfert de l'art antérieur nécessite généralement une intervention humaine importante, de manière notamment à garantir le positionnement correct du film de transfert relativement au substrat décoré. En effet, un positionnement non optimal peut conduire à un objet final dont l'aspect visuel n'est pas satisfaisant. Ceci vaut particulièrement dans le secteur du luxe, par exemple dans le secteur de la parfumerie, où les éléments de décoration doivent être réalisés de façon extrêmement précise et irréprochable pour répondre aux attentes de la clientèle. En conséquence, tout positionnement insuffisamment précis d'un motif sur un objet de luxe conduit à mettre cet objet décoré au rebut, ce qui représente des coûts non négligeables, notamment dans le cas d'objets de valeur lourds tels que des flacons de parfum en verre.

De plus, cette nécessité d'un positionnement précis du motif à transférer rend indispensable le recours à un film de transfert transparent, afin de permettre à l'opérateur de fabrication d'opérer un contrôle de positionnement rigoureux. Ceci constitue bien entendu une contrainte supplémentaire, qui peut influer notamment sur le coût de fabrication, sans d'ailleurs pour autant constituer une garantie absolue en matière de précision de positionnement, laquelle dépend avant tout de l'opérateur de fabrication. US 5458715 montre un système optique pour positionner un transfert sur un substrat.

En définitive, les procédés connus de décoration par transfert ne permettent pas d'obtenir un résultat parfaitement satisfaisant de façon industrielle, à moindre coût.

Les objets assignés à la présente invention visent en conséquence à remédier aux différents inconvénients énumérés précédemment, et à proposer de nouveaux système et procédé pour apposer un motif sur un substrat en une place prédéterminée unique, qui permettent d'apposer industriellement le motif sur le substrat par transfert de façon extrêmement rapide, précise, simple et bon marché.

Un autre objet de l'invention vise à proposer de nouveaux système et procédé pour apposer un motif sur un substrat en une place prédéterminée unique qui soient aisément automatisables.

Un autre objet de l'invention vise à proposer de nouveaux système et procédé pour apposer un motif sur un substrat en une place prédéterminée unique qui reposent sur des principes extrêmement simples et fiables.

Un autre objet de l'invention vise à proposer de nouveaux système et procédé pour apposer un motif sur un substrat en une place prédéterminée unique qui mettent en oeuvre un minimum de composants différents.

Un autre objet de l'invention vise à proposer de nouveaux système et procédé pour apposer un motif sur un substrat en une place prédéterminée unique qui permettent d'obtenir des cadences de fabrications automatisées élevées.

Les objets assignés à la présente invention sont atteints à l'aide d'un système pour apposer un motif en une place prédéterminée unique sur un substrat, ledit système comprenant d'une part un moyen de transfert auquel est attaché de façon amovible ledit motif et d'autre part un moyen de pressage pour presser contre le substrat le moyen de transfert et le motif attaché à ce dernier, ledit système étant caractérisé en ce qu'il comprend un moyen d'assistance au positionnement du motif en ladite place prédéterminée unique sur le substrat, ledit moyen d'assistance au positionnement comprenant un premier organe monté solidaire du substrat ou du moyen de pressage et un deuxième organe monté solidaire du moyen de transfert, lesdits premier et deuxième organes étant conçus pour que s'établisse entre eux, lorsqu'ils sont mis en correspondance, une coopération inhibant leur possibilité d'écartement mutuel.

Les objets assignés à l'invention sont également atteints à l'aide d'un procédé de fabrication d'un substrat sur lequel est apposé un motif en une place prédéterminée unique, ledit procédé comprenant d'une part une étape de réalisation ou de fourniture d'un moyen de transfert auquel est attaché de façon amovible ledit motif, et d'autre part une étape de pressage, contre le substrat, du moyen de transfert et du motif attaché à ce dernier, ladite étape de pressage étant effectuée à l'aide d'un moyen de pressage, ledit procédé étant caractérisé en ce qu'il comprend une étape de réalisation d'un moyen d'assistance au positionnement du motif en ladite place prédéterminée sur le substrat, étape au cours de laquelle un premier et un deuxième organe formant ledit moyen d'assistance au positionnement sont montés solidaires respectivement du substrat ou du moyen de pressage d'une part et du moyen de transfert d'autre part, lesdits premier et deuxième organes étant conçus pour que s'établisse entre eux, lorsqu'ils sont mis en correspondance, une coopération inhibant leur possibilité d'écartement mutuel, le procédé comprenant également, préalablement à l'étape de pressage, une étape de mise en correspondance des premier et deuxième organes pour que s'établisse entre eux ladite coopération.

Les objets assignés à l'invention sont également atteints à l'aide d'un sous-ensemble de transfert pour apposer un motif sur un substrat, ledit sous-ensemble de transfert comprenant un moyen de transfert auquel est attaché de façon amovible ledit motif et étant caractérisé en ce qu'il comprend un deuxième organe monté directement solidaire du moyen de transfert, ledit deuxième organe comprenant un aimant ou un élément ferromagnétique et faisant partie d'un moyen d'assistance au positionnement du motif relativement au substrat, ledit moyen d'assistance comprenant en outre un premier organe monté solidaire soit d'un support accueillant le substrat soit d'un moyen de pressage pour presser contre le substrat le moyen de transfert et le motif attaché à ce dernier, lesdits premier et deuxième organes étant conçus pour que s'établisse entre eux, lorsqu'ils sont mis en correspondance, une coopération inhibant leur possibilité d'écartement mutuel.

D'autres objets et avantages de l'invention apparaîtront mieux à la lecture de la description ci-après, ainsi qu'à l'aide des dessins annexés, donnés à titre purement illustratif et non limitatif, dans lesquels :
- La figure 1 illustre, de façon schématique, un support pourvu d'un logement accueillant un substrat (en l'espèce un flacon en verre) sur lequel est destiné être apposé un motif en une place prédéterminée unique.
- La figure 2 illustre, de façon schématique, un sous-ensemble de transfert conforme à l'invention comprenant d'une part un film de transfert auquel est attaché un motif formé d'une pluralité de perles de verre, et d'autre part deux aimants attachés au film de transfert et faisant partie d'un moyen d'assistance au positionnement du motif relativement au substrat.
- La figure 3 illustre, de façon schématique, la coopération du film de transfert de la figure 2 et du sous-ensemble support/substrat de la figure 1, en vue de transférer le motif porté par le film sur le substrat.
- La figure 4 est une vue schématique en coupe de la figure 3.
- La figure 5 est une vue schématique en coupe d'un mode alternatif de réalisation de l'invention.
- La figure 6 illustre, selon une vue schématique, un flacon en verre recouvert d'un motif en perles de verre obtenu à l'issue d'un procédé conforme à l'invention.
- La figure 7 illustre un système conforme à l'invention dans lequel le film de transfert défile, grâce à un système de rouleaux enrouleur/dérouleur, en regard d'un substrat à décorer.

L'invention concerne, selon un premier aspect, un système 1 pour apposer un motif 2 en une place prédéterminée unique sur un substrat 3, de telle sorte que le substrat 3 soit revêtu par le motif 2, ce dernier étant attaché superficiellement au substrat 3. Ainsi, dans le cadre de l'invention, un motif 2 donné doit être transféré en un endroit particulier sur le substrat 3, et uniquement en cet endroit, pour atteindre l'effet de décoration (et/ou l'effet fonctionnel recherché).

De préférence, le substrat 3 est à base de verre, et de façon encore plus préférentielle comprend un flacon 3A, de préférence en verre, et par exemple un flacon de verre destiné à contenir un parfum. De préférence, le motif 2 comprend quant à lui une pluralité d'éléments 2A, qui sont de préférence des éléments en relief. De façon préférentielle, comme illustré aux figures, le motif 2 comprend ainsi une pluralité de perles, de préférence en verre.

Conformément à l'invention, le système 1 comprend un moyen de transfert 4 auquel est attaché de façon amovible le motif 2.

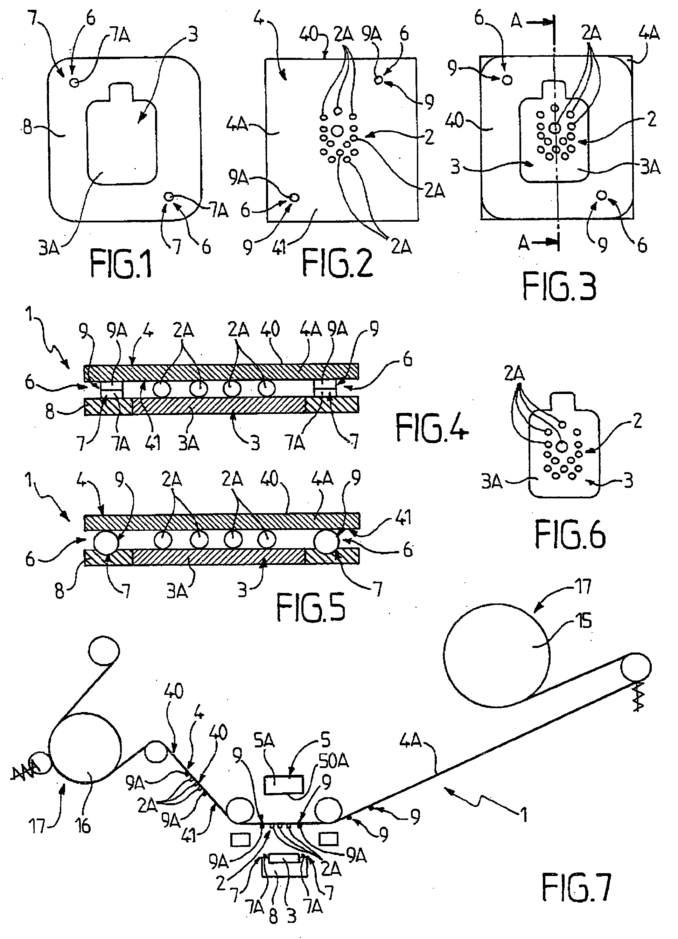

Le moyen de transfert 4 est par exemple formé par un film de transfert 4A. Ainsi, dans les exemples illustrés aux figures, le motif 2 comprend une pluralité d'éléments 2A attachés de façon amovible à un film de transfert 4A formant le moyen de transfert 4. Un tel film de transfert est bien connu en tant que tel. Il peut par exemple se présenter sous la forme d'une plaque flexible ou rigide, éventuellement transparente pour faciliter les opérations de transfert. Dans l'exemple des figures 1 à 5, le film de transfert 4A se présente ainsi sous la forme d'une plaque flexible de forme sensiblement rectangulaire réalisée en matière plastique transparente, étant entendu que le recours à une matière transparente est purement facultatif. Dans le mode de réalisation de la figure 7, le film de transfert 4A se présente sous la forme d'un ruban en matière souple conçu pour défiler entre un rouleau enrouleur 15 et un rouleau dérouleur 16.

De façon classique, le motif 2, c'est-à-dire en l'espèce la pluralité d'éléments 2A qui le forment, sont collés à la surface du film de transfert 4A. La face libre du motif 2, formée en l'espèce par les faces libres des éléments 2A, est quant à elle revêtue d'une colle activable, sensible par exemple à la chaleur et/ou à la pression, ou non activable (autocollante).

Le principe du transfert mis en oeuvre dans le cadre de l'invention est avantageusement le suivant :
- Le moyen de transfert 4 auquel est attaché le motif 2 est pressé contre le substrat 3, de façon à ce que le motif 2 se retrouve interposé entre le substrat 3 d'une part et le moyen de transfert 4 d'autre part (cf. figure 4 et 5).
- Sous l'effet de la pression exercée et/ou d'un apport de chaleur, la colle (qui est de préférence une colle thermofusible, telle que celles utilisées dans les procédés de type « *hot-fix* ») située sur la face libre du motif 2, qui se trouve donc à l'interface entre le substrat 3 et le motif 2, devient collante. Les éléments 2A, formant le motif 2, se retrouvent ainsi collés au substrat 3 d'une part, et au moyen de transfert 4 d'autre part.
- Il suffit ensuite d'exercer un effort de pelage sur le moyen de transfert 4 pour arracher ce dernier du sous-ensemble désormais formé par le substrat 3 et le motif 2 collé au substrat 3.
- On obtient alors un produit fini consistant, comme illustré à la figure 6, en un substrat 3 décoré par un motif 2.

Afin de presser le moyen de transfert 4 contre le substrat 3, le système 1 conforme à l'invention comprend un moyen de pressage 5 (cf. figure 7) pour presser contre le substrat 3 le moyen de transfert 4 et le motif 2 attaché à ce dernier. Avantageusement, le moyen de pressage 5 comprend un tampon 5A pourvu d'une face plane 50A destinée à venir appuyer contre la face externe 40 du moyen de transfert 4, opposée à la face interne 41 à laquelle sont attachés les éléments 2A formant le motif 2. Le moyen de pressage 5 peut comprendre un moyen d'actionnement automatique (par exemple de type mécanique, automatique et/ou électrique) ou encore être actionné manuellement. Dans une variante simplifiée de réalisation, le moyen de pressage 5 peut être constitué directement par le moyen de transfert 4 lui-même, sur lequel l'utilisateur peut exercer une pression manuelle pour opérer le transfert du motif 2 du moyen de transfert 4 vers et sur le substrat 3. Dans un exemple de réalisation, le moyen de pressage 5 est chauffant, de façon à chauffer la colle thermofusible qui recouvre avantageusement la face libre du motif 2 et ainsi activer ladite colle. L'activation de la colle peut cependant être effectuée par tout autre moyen, et par exemple en soumettant le motif 2 à un rayonnement infrarouges.

Conformément à l'invention, le système 1 comprend un moyen d'assistance 6 au positionnement du motif 2 relativement au substrat 3. Plus précisément, le moyen d'assistance 6 est un moyen d'assistance au positionnement du motif 2 en ladite place prédéterminée unique sur le substrat 3. Le moyen d'assistance 6 aide donc l'utilisateur à positionner le motif 2 en un seul endroit particulier sur le substrat 3. En d'autres termes, le moyen d'assistance 6 a pour fonction de contribuer à un positionnement relatif optimal du motif 2 sur le substrat 3, de manière à ce que le motif 2 soit apposé avec précision en une place prédéterminée sur le substrat 3. A cette fin, le moyen d'assistance 6 au positionnement comprend un premier organe 7 monté solidaire, directement ou indirectement, du substrat 3 ou du moyen de pressage 5. En d'autres termes, le premier organe 7 forme avec le substrat 3 ou le moyen de pressage 5 un sous-ensemble unitaire, c'est-à-dire que le premier organe 7 est avantageusement lié au substrat 3 ou au moyen de pressage 5 par une liaison mécanique de type encastrement, n'autorisant de préférence aucun degré de liberté entre le substrat 3 et le premier organe 7 (ou entre le moyen de pressage 5 et le premier organe 7, selon le montage choisi).

Dans les exemples illustrés aux figures, le système 1 comprend avantageusement un support 8 pourvu d'un logement accueillant le substrat 3. Par exemple, le support 8 consiste en un chariot à la surface duquel est ménagée une empreinte de forme complémentaire à celle du substrat 3, lequel est formé par un flacon de verre dans les exemples illustrés aux figures. Le substrat 3 est ainsi logé dans le support 8, et forme avec ce dernier un sous-ensemble unitaire.

Dans ce cas de figure, le premier organe 7 est avantageusement solidaire du support 8, lequel est lui-même solidaire du substrat 3 comme expliqué précédemment. Dans ce cas, le premier organe 7 est donc monté indirectement solidaire du substrat 3, par l'intermédiaire du support 8. Le premier organe 7 est fixé audit support 8. Il est cependant tout à fait envisageable que le premier organe 7 soit monté directement solidaire du substrat 3 lui-même.

Selon un autre mode de réalisation évoqué ci-avant, il est également envisageable, à titre alternatif, que le premier organe 7 soit monté solidaire, directement ou indirectement, du moyen de pressage 5. Ce dernier cas de figure est plus spécifiquement approprié à un système ou la position relative du moyen de pressage 5 et du substrat 3 (ou de son support 8) est établie de manière précise et permanente, grâce à l'emploi de moyens de liaison mécanique appropriés entre le moyen de pressage 5 et le support 8 par exemple. Dans ce cas, le moyen de pressage 5 est par exemple monté sur un bâti (non représenté), bâti sur lequel est également monté le support 8.

Le moyen d'assistance 6 au positionnement comprend également un deuxième organe 9 monté solidaire, directement ou indirectement, du moyen de transfert 4. Ainsi, dans les exemples illustrés aux figures, le deuxième organe 9 est monté directement solidaire du moyen de transfert 4, et plus précisément est attaché sur la face interne 41 du film de transfert 4A.

Conformément à l'invention, les premier et deuxième organes 7, 9 sont conçus pour que s'établisse entre eux, lorsqu'ils sont mis en correspondance (c'est-à-dire lorsqu'ils sont mis en regard l'un de l'autre, de manière suffisamment proche), une coopération inhibant leur possibilité d'écartement mutuel. En d'autres termes, les premier et deuxième organes 7, 9 sont conçus pour interagir lorsqu'ils se trouvent l'un contre l'autre ou à proximité l'un de l'autre, cette interaction liant le premier et le deuxième organe 7, 9 de façon à limiter leur faculté de déplacement relatif, et en particulier de limiter leur faculté de glissement relatif dans le plan parallèle au substrat 3 et au moyen de transfert 4. Afin de faciliter le positionnement adéquat du motif 2 sur le substrat 3, et ainsi remplir pleinement son rôle d'assistance au positionnement du motif 2 en une place prédéterminée unique sur le substrat 3, le moyen d'assistance 6 est conçu pour que ladite coopération entre lesdits premier et deuxième organe 7, 9 ne s'effectue pas en permanence mais uniquement lorsque les premier et deuxième organes 7, 9 se trouvent l'un contre l'autre et/ou à proximité l'un de l'autre, afin de limiter l'intervention de l'utilisateur dans l'atteinte, par le motif 2, de sa place prédéterminée unique sur le substrat 3.

Dans le mode de réalisation illustré à la figure 4, les premier et deuxième organes 7, 9 sont conçus pour que la coopération qui s'établit entre eux lorsqu'ils sont mis en correspondance consiste en une attraction magnétique. A cette fin, le premier organe 7 et le deuxième organe 9 comprennent chacun au moins un aimant et/ou un élément ferromagnétique 9A. Dans ce cas, le premier organe 7 comprend par exemple au moins un aimant 7A tandis que le deuxième organe 9 comprend au moins un élément ferromagnétique 9A. Bien entendu, il est tout à fait envisageable qu'à l'inverse le premier organe 7 comprenne au moins un élément ferromagnétique et que le deuxième organe 9 comprenne au moins un aimant, l'essentiel étant que les premier et deuxième organes 7, 9 présentent un caractère magnétique complémentaire susceptible de générer une interaction entre eux. Ainsi, dans le mode de réalisation illustré aux figures, le support 8 est pourvu de deux aimants 7A, qui sont par exemple collés à sa surface, tandis que le film de transfert 4A (et plus précisément sa face intérieure 41) est pourvu de deux éléments ferromagnétiques 9A. II suffit ainsi de mettre grossièrement en correspondance les aimants 7A et les éléments ferromagnétiques 9A, de manière à ce que les éléments ferromagnétiques entrent dans le champs magnétique des aimants 9A, pour générer un effet d'auto-positionnement précis du moyen de transfert 4 sur le substrat 3 sous l'effet de l'attraction magnétique s'établissant entre les aimants 7A et les éléments ferromagnétiques 9A. Les sous-ensembles formés par le logement 8 et le substrat 3 d'une part et le moyen de transfert 4 et le motif 2 d'autre part se retrouvent ainsi de façon automatique, par attraction mutuelle, dans une position relative prédéterminée précise, qui garantit que le motif 2 sera déposé au bon endroit à la surface du substrat 3.

Dans un mode de réalisation tout particulièrement préféré, le premier organe 7 comprend au moins un premier aimant tandis que le deuxième organe 9 comprend au moins un deuxième aimant, lesdits premier et deuxième aimants étant conçus pour s'attirer mutuellement lors de la mise en correspondance desdits premier et deuxième organes 7, 9. Le recours à la coopération entre deux aimants permet d'obtenir un effet d'auto-positionnement et d'auto-centrage, dans la mesure où les deux aimants s'attirent vers une position de contact mutuel unique, qui constitue une position de rappel unique.

Avantageusement le premier organe 7 comprend au moins un premier aimant et un troisième aimant, tandis que le deuxième organe 9 comprend au moins un deuxième aimant et un quatrième aimant, lesdits premier et deuxième aimants étant conçus pour s'attirer mutuellement lors de la mise en correspondance desdits premier et deuxième organes 7, 9 tandis que lesdits premier et quatrième aimants (et/ou lesdits deuxième et troisième aimants) sont conçus pour se repousser mutuellement lors de la mise en correspondance desdits premier et deuxième organes 7, 9. Par exemple, chacun desdits premier, deuxième, troisième et quatrième aimants présentent deux faces opposées correspondant respectivement au pôle nord et au pôle sud de l'aimant concerné. Le premier aimant est dans ce cas attaché (directement ou indirectement) au substrat 3 ou au moyen de pressage 5 par sa première face (par exemple par collage sur le support 8), de telle sorte que sa deuxième face reste libre, tandis que le troisième aimant est attaché (directement ou indirectement) au substrat 3 ou au moyen de pressage 5 par sa deuxième face (par exemple par collage sur le support 8), de telle sorte que sa première face reste libre. De même, le deuxième aimant est attaché (directement ou indirectement) au moyen de transfert 4 par sa deuxième face (par exemple par collage sur le support 8), de telle sorte que sa première face reste libre, tandis que le quatrième aimant est attaché (directement ou indirectement) au moyen de transfert 4 par sa première face (par exemple par collage sur le support 8), de telle sorte que sa deuxième face reste libre. Cette disposition évite de transférer le motif 2 à l'envers sur le substrat 3, dans la mesure où les faces libres des premier et quatrième aimants (de même que celles des deuxième et troisième aimants) présentent des pôles opposés qui se repoussent et empêchent de ce fait un transfert du motif 2 selon une orientation impropre.

Ce mode de réalisation mettant en oeuvre une attraction magnétique entre soit le substrat 3 et le moyen de transfert 4, soit le moyen de pressage 5 et le moyen de transfert 4, s'avère particulièrement intéressant à mettre en oeuvre dans le cas d'un système à défilement comme illustré à la figure 7. Dans ce mode de réalisation, qui est particulièrement avantageux du point de vue industriel compte-tenu de ses possibilités d'automatisation, le système 1 comprend un dispositif 17 pour faire défiler le film de transfert 4A en regard du substrat 3, de préférence par enroulement / déroulement dudit film de transfert 4A, par exemple entre un rouleau dérouleur 16 et un rouleau enrouleur 15, comme illustré à la figure 7. Dans ce cas de figure, le film de transfert 4A se présente sous la forme d'une bande enroulable / déroulable sur laquelle sont disposés à intervalles réguliers des motifs 2. Dans ce mode de réalisation, le système 1 comprend un poste de transfert où défilent des chariots formant support 8, chaque chariot transportant un substrat 3 à décorer. En fonctionnement, le dispositif 17 de défilement permet de présenter un motif 2 en regard d'un substrat 3 vierge. Cette opération de présentation doit simplement permettre un positionnement approximatif du motif 2 relativement au substrat 3, ce positionnement devant uniquement être suffisamment précis pour que les éléments ferromagnétiques (ou aimants) 9A entrent dans les champs magnétiques générés par les aimants 7A associés au substrat 3 décoré. Ceci permet un auto-positionnement extrêmement rapide, précis et automatique du moyen de transfert 4 sur le substrat 3, par attraction magnétique mutuelle. Il suffit alors ensuite de procéder à l'opération de transfert par apport de pression (à l'aide du moyen de pressage 5) et éventuellement de chaleur. Une fois l'opération de transfert réalisée et le flacon précisément décoré, le dispositif 17 fait défiler les films de transfert 4A d'un pas (correspondant à la distance théorique entre deux motifs 2) ce qui a pour effet de décoller le film de transfert 4A du motif 2 apposé sur le substrat 3. Eventuellement, il peut être prévu un dispositif additionnel aidant au décollement du motif 2 du moyen de transfert 4.

Ainsi, la simple adjonction d'un couple aimant/élément ferromagnétique, ou de préférence aimant/aimant, permet d'obtenir un processus automatisé extrêmement fiable, simple et bon marché permettant d'obtenir un positionnement particulièrement précis du motif 2 sur le substrat 3. L'invention permet donc de procurer un gain de temps et de qualité, en s'affranchissant d'opérations manuelles' fastidieuses et imprécises.

Selon un mode de réalisation alternatif, illustré à la figure 5, il est envisageable que les premier et deuxième organes 7, 9 soient conçus pour que la coopération qui s'établit entre eux lorsqu'ils sont mis en correspondance soit de nature mécanique. Par exemple, les premier et deuxième organes 7, 9 présentent avantageusement des formes complémentaires mâle et femelle. Selon le mode de réalisation illustré à la figure 5, le premier organe 7 est formé par deux empreintes en forme de calottes sphériques ménagées à la surface du logement 8, tandis que le deuxième organe 9 comprend deux plots en relief, de préférence de forme sensiblement sphérique, attachés (par exemple par collage) au moyen de transfert 4, et plus précisément à la face intérieure 41 de ce dernier.

Les plots en relief sont ainsi destinés à venir en appui dans et contre les empreintes ménagées dans le logement 8 et formant le premier organe 7. Cette interaction mécanique produit un effet d'auto-centrage et limite le glissement relatif du moyen de transfert 4 et du substrat 3 dans le plan parallèle au substrat 3 et au moyen de transfert 4.

Dans une variante préférentielle de réalisation, les éléments 2A formant le motif 2 sont des éléments en relief, et le deuxième organe 9 comprend un élément male similaire auxdits éléments 2A en relief formant le motif 2. Ainsi, si le motif 2 est constitué d'une pluralité de perles, les éléments males formant le deuxième organe 9 pourront être constitué par une ou plusieurs de ces mêmes perles. Cela est particulièrement avantageux du point de vue de la simplicité du procédé de fabrication, puisque le recours à des pièces spécifiques pour former le deuxième organe 9 n'est pas nécessaire dans ce cas.

De manière générale, quel que soit le mode de réalisation envisagé (coopération mécanique ou magnétique), le deuxième organe 9 peut être fixé sur le moyen de transfert 4 de la même façon que le motif 2 est fixé sur le moyen de transfert 4. Ceci présente un avantage certain en matière de simplicité et de maîtrise des coûts.

Il ressort de ce qui précède que le moyen d'assistance 6 est un moyen d'assistance automatique au positionnement du motif 2 dans sa place prédéterminée unique, puisqu'il permet à l'utilisateur de trouver automatiquement, par simple mise en correspondance (manuelle ou mécanisée) des premier et deuxième organes 7, 9, la position prédéterminée unique dans laquelle le motif 2 doit être transféré sur le substrat. Ainsi, il existe avantageusement une seule position relative prédéterminée stable dans laquelle s'établit, entre les premier et deuxième organes, une coopération maintenant lesdits premier et deuxième organes 7, 9 dans ladite position relative prédéterminée.

L'invention concerne également en tant que tel un procédé de fabrication d'un substrat 3 sur lequel est apposé un motif 2 en une place prédéterminée unique, ledit procédé de fabrication étant susceptible d'être mis en oeuvre à l'aide du système 1 décrit dans ce qui précède.

Conformément à l'invention, le procédé comprend une étape de réalisation ou de fourniture d'un moyen de transfert 4 auquel est attaché de façon amovible le motif 2 à apposer.

Une telle étape de réalisation ou de fourniture d'un moyen de transfert 4 est bien connue en tant que telle, de sorte qu'elle ne sera pas décrite ici plus avant.

Le procédé conforme à l'invention comprend également une étape de pressage, contre le substrat 3, du moyen de transfert 4 et du motif 2 attaché à ce dernier, ladite étape de pressage étant effectuée à l'aide d'un moyen de pressage 5.

Ledit procédé comprend en outre une étape de réalisation d'un moyen d'assistance 6 au positionnement du motif 2 en ladite place prédéterminée unique sur le substrat 3, étape au cours de laquelle un premier et un deuxième organe 7, 9 formant ledit moyen d'assistance 6 au positionnement sont montés solidaires respectivement du substrat 3 ou du moyen de pressage 5 d'une part et du moyen de transfert 4 d'autre part. Les premier et deuxième organes 7, 9 sont conçus, comme exposé précédemment, pour que s'établisse entre eux, lorsqu'ils sont mis en correspondance, une coopération inhibant leur possibilité d'écartement mutuel, afin de permettre l'atteinte, par le motif 2, de sa place prédéterminée de transfert de façon automatique et/ou intuitive.

Comme évoqué précédemment en relation avec la description du système 1, le procédé conforme à l'invention comprend également, préalablement à l'étape de pressage précitée, une étape de mise en correspondance des premier et deuxième organes 7, 9 pour que s'établisse entre eux la coopération en question. Cette étape de mise en correspondance consiste à rapprocher suffisamment les premier et deuxième organes 7, 9 l'un de l'autre pour que se produise soit une interaction magnétique, soit une interaction (auto-centrage) mécanique, ladite coopération pouvant ainsi consister avantageusement en une attraction magnétique ou en une coopération de nature mécanique, cette coopération se produisant en une seule position relative des premier et deuxième organe 7, 9, correspondant à la position adéquate de transfert du motif 2 sur le substrat 3.

De préférence, le procédé inventif est appliqué à un motif 2 qui comprend lui-même une pluralité d'éléments 2A attachés de façon amovible à un film de transfert 4A formant le moyen de transfert 4.

De façon particulièrement avantageuse, le procédé comprend, comme illustré à la figure 7 et comme déjà décrit précédemment, une étape de défilement du film de transfert 4A en regard du substrat 3 par enroulement / déroulement dudit film de transfert 4A jusqu'à ce que les premier et deuxième organes 7, 9 soient en correspondance.

De façon particulièrement préférentielle, le procédé est appliqué pour un substrat 3 comprenant un flacon, de préférence en verre, tandis que le motif 2 comprend une pluralité de perles, qui sont également de préférence en verre.

L'invention permet ainsi de s'affranchir totalement d'un contrôle visuel pour le transfert du motif 2 sur le substrat 3, et ceci à l'aide de moyens simples et peu onéreux qui permettent une automatisation du procédé.

L'invention concerne enfin en tant que tel un sous-ensemble de transfert 40 (illustré à la figure 2) pour apposer un motif 2 sur un substrat 3, de préférence en une position prédéterminée unique sur ce dernier, ledit sous-ensemble de transfert 40 comprenant un moyen de transfert 4 auquel est attaché de façon amovible ledit motif 2.

Le sous-ensemble de transfert 40 comprend également un deuxième organe 9 monté directement solidaire du moyen de transfert 4, ledit deuxième organe 9 faisant partie d'un moyen d'assistance 6 au positionnement du motif 2 relativement au substrat 3.

Le moyen d'assistance 6 comprend en outre un premier organe 7 monté solidaire soit d'un support 8 accueillant le substrat 3 soit d'un moyen de pressage 5 pour presser contre le substrat 3 le moyen de transfert 4 et le motif 2 attaché à ce dernier, lesdits premier et deuxième organes 7, 9 étant conçus pour que s'établisse entre eux, lorsqu'ils sont mis en correspondance, une coopération inhibant leur possibilité d'écartement mutuel, comme exposé précédemment.

Comme décrit dans ce qui précède, le deuxième organe 9 comprend au moins un aimant ou un élément ferromagnétique 9A.

Dans une variante de réalisation préférée, le sous-ensemble de transfert 40 comprend ainsi d'une part un moyen de transfert 4 auquel est attaché de façon amovible le motif 2 à transférer et d'autre part au moins un aimant ou un élément ferromagnétique 9A monté solidaire du moyen de transfert 4 (par exemple directement attaché à ce dernier) et destiné à assister au positionnement du motif 2 relativement au substrat 3 par attraction magnétique avec un élément ferromagnétique ou un aimant 7A monté solidaire soit d'un support 8 accueillant le substrat 3 soit d'un moyen de pressage 5 pour presser contre le substrat 3 le moyen de transfert 4 et le motif 2 attaché à ce dernier.

## Revendications

1. Système (1) pour apposer un motif (2) en une place prédéterminée unique sur un substrat (3), ledit système (1) comprenant d'une part un moyen de transfert (4) auquel est attaché de façon amovible ledit motif (2) et d'autre part un moyen de pressage (5) pour presser contre le substrat (3) le moyen de transfert (4) et le motif (2) attaché à ce dernier, ledit système (1) étant **caractérisé en ce qu'**il comprend un moyen d'assistance (6) au positionnement du motif (2) en ladite place prédéterminée unique sur le substrat (3), ledit moyen d'assistance (6) au positionnement comprenant un premier organe (7) monté solidaire du substrat (3) ou du moyen de pressage (5) et un deuxième organe (9) monté solidaire du moyen de transfert (4), lesdits premier et deuxième organes (7, 9) étant conçus pour que s'établisse entre eux, lorsqu'ils sont mis en correspondance, une coopération inhibant leur possibilité d'écartement mutuel.

2. Système (1) selon la revendication 1 **caractérisé en ce qu'**il comprend un support (8) pourvu d'un logement accueillant le substrat (3), ledit premier organe (7) étant fixé audit support (8).

3. Système (1) selon l'une des revendications 1 et 2 **caractérisé en ce que** les premier et deuxième organes (7, 9) sont conçus pour que ladite coopération consiste en une attraction magnétique.

4. Système (1) selon la revendication 3 **caractérisé en ce que** le premier organe (7) et le deuxième organe (9) comprennent chacun au moins un aimant et/ou un élément ferromagnétique (9A).

5. Système (1) selon la revendication 4 **caractérisé en ce que** le premier organe (7) comprend au moins un premier aimant tandis que le deuxième organe (9) comprend au moins un deuxième aimant, lesdits premier et deuxième aimants étant conçus pour s'attirer mutuellement lors de la mise en correspondance desdits premier et deuxième organes (7, 9).

6. Système (1) selon la revendication 5 **caractérisé en ce que** le premier organe (7) comprend au moins un premier aimant et un troisième aimant tandis que le deuxième organe (9) comprend au moins un deuxième aimant et un quatrième aimant, lesdits premier et deuxième aimants étant conçus pour s'attirer mutuellement lors de la mise en correspondance desdits premier et deuxième organes (7, 9) tandis que lesdits premier et quatrième aimants sont conçus pour se repousser mutuellement lors de la mise en correspondance desdits premier et deuxième organes (7, 9).

7. Système (1) selon la revendication 1 ou 2 **caractérisé en ce que** les premier et deuxième organes (7, 9) sont conçus pour que ladite coopération soit de nature mécanique.

8. Système (1) selon l'une des revendications 1 à 7 **caractérisé en ce que** le motif (2) comprend une pluralité d'éléments (2A) attachés de façon amovible à un film de transfert formant le moyen de transfert.

9. Système (1) selon la revendication 8 **caractérisé en ce qu'**il comprend un dispositif (17) pour faire défiler le film de transfert (4A) en regard du substrat (3).

10. -Système (1) selon l'une des revendications 1 à 9 **caractérisé en ce que** le moyen de pressage (5) comprend un tampon (5A).

11. Système (1) selon l'une des revendications 1 à 10 **caractérisé en ce que** le substrat (3) comprend un flacon (3A), de préférence en verre, tandis que le motif (2) comprend une pluralité de perles, de préférence en verre.

12. Procédé de fabrication d'un substrat (3) sur lequel est apposé un motif (2) en une place prédéterminée unique, ledit procédé comprenant d'une part une étape de réalisation ou de fourniture d'un moyen de transfert (4) auquel est attaché de façon amovible ledit motif (2), et d'autre part une étape de pressage, contre le substrat (3), du moyen de transfert (4) et du motif (2) attaché à ce dernier, ladite étape de pressage étant effectuée à l'aide d'un moyen de pressage (4), ledit procédé étant **caractérisé en ce qu'**il comprend une étape de réalisation d'un moyen d'assistance (6) au positionnement du motif (2) en ladite place prédéterminée sur le substrat (3), étape au cours de laquelle un premier et un deuxième organe (7,9) formant ledit moyen d'assistance au positionnement sont montés solidaires respectivement du substrat (3) ou du moyen de pressage (5) d'une part et du moyen de transfert (4) d'autre part. lesdits premier et deuxième organes (7, 9) étant conçus pour que s'établisse entre eux, lorsqu'ils sont mis en correspondance, une coopération inhibant leur possibilité d'écartement mutuel, le procédé comprenant également, préalablement à l'étape de pressage, une étape de mise en correspondance des premier et deuxième organes (7, 9) pour que s'établisse entre eux ladite coopération.

13. Procédé selon la revendication 12 **caractérisé en ce que** les premier et deuxième organes (7, 9) sont conçus pour que ladite coopération consiste en une attraction magnétique.

14. Procédé selon la revendication 12 ou 13 **caractérisé en ce que** le substrat (3) comprend un flacon, de préférence en verre, tandis que le motif (2) comprend une pluralité de perles, de préférence en verre.

15. Sous-ensemble de transfert (40) pour apposer un motif (2) sur un substrat (3), ledit sous-ensemble de transfert (40) comprenant un moyen de transfert (4) auquel est attaché de façon amovible ledit motif (2) et étant **caractérisé en ce qu'**il comprend un deuxième organe (9) monté directement solidaire du moyen de transfert (4), ledit deuxième organe (9) comprenant un aimant ou un élément ferromagnétique et faisant partie d'un moyen d'assistance (6) au positionnement du motif (2) relativement au substrat (3), ledit moyen d'assistance (6) comprenant en outre un premier organe (7) monté solidaire soit d'un support (8) accueillant le substrat (3) soit d'un moyen de pressage (5) pour presser contre le substrat (3) le moyen de transfert (4) et le motif (2) attaché à ce dernier, **lesdits premier et deuxième organes (7, 9) pouvant être mis en correspondance,** lesdits premier et deuxième organes (7, 9) étant conçus pour que s'établisse entre eux, lorsqu'ils sont mis en correspondance, une coopération inhibant leur possibilité d'écartement mutuel.

## Patentansprüche

1. System (1) zum Anbringen eines Motivs (2) an einer einzigen vorbestimmten Stelle auf einem Substrat (3), wobei das System (1) einerseits ein Transfermittel (4), an dem das Motiv (2) lösbar anhaftet, und andererseits ein Pressmittel (5) umfasst, um das Transfermittel (4) und das an diesem anhaftende Motiv (2) gegen das Substrat (3) zur pressen, wobei das System (1) **dadurch gekennzeichnet ist, dass** es ein Unterstützungsmittel (6) für die Positionierung des Motivs (2) an der einzigen vorbestimmten Stelle auf dem Substrat (3) umfasst, wobei das Unterstützungsmittel (6) für die Positionierung ein erstes Element (7), das fest mit dem Substrat (3) oder dem Pressmittel (5) verbunden ist, und ein zweites Element (9) umfasst, das fest mit dem Transfermittel (4) verbunden ist, wobei die ersten und zweiten Elemente (7, 9) derart ausgeführt sind, dass sich zwischen ihnen, wenn sie in Verbindung gebracht werden, ein Zusammenwirken einstellt, das ihre Möglichkeit, sich gegenseitig voneinander zu entfernen, hemmt.

2. System (1) nach Anspruch 1, **dadurch gekennzeichnet, dass** es einen Träger (8) umfasst, der mit einer Aufnahme versehen ist, die das Substrat (3) aufnimmt, wobei das erste Element (7) am Träger (8) befestigt ist.

3. System (1) nach einem der Ansprüche 1 und 2, **dadurch gekennzeichnet, dass** die ersten und zweiten Elemente (7, 9) derart ausgeführt sind, dass das Zusammenwirken in einer magnetischen Anziehung besteht.

4. System (1) nach Anspruch 3, **dadurch gekennzeichnet, dass** das erste Element (7) und das zweite Element (9) jeweils mindestens einen Magneten und/oder ein ferromagnetisches Element (9A) umfassen.

5. System (1) nach Anspruch 4, **dadurch gekennzeichnet, dass** das erste Element (7) mindestens einen ersten Magneten umfasst, während das zweite Element (9) mindestens einen zweiten Magneten umfasst, wobei der erste und der zweite Magnet derart ausgeführt sind, dass sie sich gegenseitig anziehen, wenn das erste und das zweite Element (7, 9) in Verbindung gebracht werden.

6. System (1) nach Anspruch 5, **dadurch gekennzeichnet, dass** das erste Element (7) mindestens einen ersten Magneten und einen dritten Magneten umfasst, während das zweite Element (9) mindestens einen zweiten Magneten und einen vierten Magneten umfasst, wobei der erste und der zweite Magnet derart ausgeführt sind, dass sie sich gegenseitig anziehen, wenn das erste und das zweite Element (7, 9) in Verbindung gebracht werden, während der erste und der vierte Magnet derart ausgeführt sind, dass sie sich gegenseitig abstoßen, wenn das erste und das zweite Element (7, 9) miteinander in Verbindung gebracht werden.

7. System (1) nach Anspruch 1 oder 2, **dadurch gekennzeichnet, dass** das erste und das zweite Element (7, 9) derart ausgeführt sind, dass das Zusammenwirken mechanischer Natur ist.

8. System (1) nach einem der Ansprüche 1 bis 7, **dadurch gekennzeichnet, dass** das Motiv (2) eine Vielzahl von Elementen (2A) umfasst, die lösbar an einer Transferfolie, die das Transfermittel bildet, anhaften.

9. System (1) nach Anspruch 8, **dadurch gekennzeichnet, dass** es eine Vorrichtung (17) umfasst, um die Transferfolie (4A) gegenüber dem Substrat (3) auflaufen zu lassen.

10. System (1) nach einem der Ansprüche 1 bis 9, **dadurch gekennzeichnet, dass** das Pressmittel (5) einen Puffer (5A) umfasst.

11. System (1) nach einem der Ansprüche 1 bis 10, **dadurch gekennzeichnet, dass** das Substrat (3) einen Flakon (3A), vorzugsweise aus Glas, umfasst, während das Motiv (2) eine Vielzahl von Perlen, vorzugsweise aus Glas, umfasst.

12. Verfahren zur Herstellung eines Substrats (3), auf dem ein Motiv (2) an einer einzigen vorbestimmten Stelle angebracht ist, wobei das Verfahren einerseits einen Schritt der Herstellung oder Bereitstellung eines Transfermittels (4), an dem das Motiv (2) lösbar anhaftet, und andererseits einen Schritt des Pressens des Transfermittels (4) und des an diesem anhaftenden Motivs (2) gegen das Substrat (3) umfasst, wobei der Schritt des Pressens mit Hilfe eines Pressmittels (4) erfolgt, wobei das Verfahren **dadurch gekennzeichnet ist, dass** es einen Schritt der Herstellung eines Unterstützungsmittels (6) für die Positionierung des Motivs (2) an der vorbestimmten Stelle auf dem Substrat (3) umfasst, wobei während dieses Schrittes ein erstes und ein zweites Element (7, 9), die das Unterstützungsmittel für die Positionierung bilden, fest mit dem Substrat (3) bzw. dem Pressmittel (5) einerseits und dem Transfermittel (4) andererseits verbunden sind, wobei die ersten und zweiten Elemente (7, 9) derart ausgeführt sind, dass sich zwischen ihnen, wenn sie in Verbindung gebracht werden, ein Zusammenwirken einstellt, das ihre Möglichkeit, sich gegenseitig voneinander zu entfernen, hemmt, wobei das Verfahren vor dem Schritt des Pressens auch einen Schritt der Herstellung einer Verbindung zwischen dem ersten und dem zweiten Element (7, 9) umfasst, damit sich zwischen ihnen das Zusammenwirken einstellt.

13. Verfahren nach Anspruch 12, **dadurch gekennzeichnet, dass** die ersten und zweiten Elemente (7, 9) derart ausgeführt sind, dass das Zusammenwirken in einer magnetischen Anziehung besteht.

14. Verfahren nach Anspruch 12 oder 13, **dadurch gekennzeichnet, dass** das Substrat (3) einen Flakon, vorzugsweise aus Glas, umfasst, während das Motiv (2) eine Vielzahl von Perlen, vorzugsweise aus Glas, umfasst.

15. Transferuntereinheit (40) zum Anbringen eines Motivs (2) auf einem Substrat (3), wobei die Transferuntereinheit (40) ein Transfermittel (4), an dem das Motiv (2) lösbar anhaftet, umfasst und **dadurch gekennzeichnet ist, dass** es ein zweites Element (9) umfasst, das direkt mit dem Transfermittel (4) verbunden ist, wobei das zweite Element (9) einen Magneten oder ein ferromagnetisches Element umfasst und Teil eines Unterstützungsmittels (6) für die Positionierung des Motivs (2) in Bezug zum Substrat (3) ist, wobei das Unterstützungsmittel (6) für die Positionierung ferner ein erstes Element (7), das entweder fest mit einem Träger (8), der das Substrat (3) aufnimmt, oder einem Pressmittel (5) verbunden ist, um das Transfermittel (4) und das an diesem anhaftende Motiv (2) gegen das Substrat (3) zu pressen, wobei die ersten und zweiten Elemente (7, 9) in Verbindung gebracht werden können, wobei die ersten und zweiten Elemente (7, 9) derart ausgeführt sind, dass sich zwischen ihnen, wenn sie in Verbindung gebracht werden, ein Zusammenwirken einstellt, das ihre Möglichkeit, sich gegenseitig voneinander zu entfernen, hemmt.

## Claims

1. A system (1) for affixing a pattern (2) at a unique predetermined location on a substrate (3), said system (1) comprising, on the one hand, a transfer means (4) to which said pattern (2) is removably attached, and on the other hand, a pressing means (5) for pressing against the substrate (3) the transfer means (4) and the pattern (2) attached to the latter, said system (1) being **characterized in that** it comprises a means (6) for aiding in the positioning of the pattern (2) at said unique predetermined location on the substrate (3), said positioning aiding means (6) comprising a first member (7) mounted integral with the substrate (3) or with the pressing means (5) and a second member (9) mounted integral with the transfer means (4), said first and second members (7, 9) being designed in such a manner that a cooperation is established between them when they are brought into correspondence with each other, preventing them from moving away from each other.

2. A system (1) according to claim 1, **characterized in that** it comprises a support (8) provided with a housing receiving the substrate (3), said first member (7) being secured to said support (8).

3. A system (1) according to any one of claims 1 and 2, **characterized in that** the first and second members (7, 9) are designed so that said cooperation consists in a magnetic attraction.

4. A system (1) according to claim 3, **characterized in that** the first member (7) and the second member (9) each comprise at least one magnet and/or one ferromagnetic element (9A).

5. A system (1) according to claim 4, **characterized in that** the first member (7) comprises at least one first magnet, whereas the second member (9) comprises at least one second magnet, said first and second magnets being designed to mutually attract each other when the first and second members (7, 9) are brought into correspondence with each other.

6. A system (1) according to claim 5, **characterized in that** the first member (7) comprises at least one first magnet and one third magnet, whereas the second member (9) comprises at least one second magnet and one fourth magnet, said first and second magnets being designed to mutually attract each other when said first and second members (7, 9) are brought into correspondence with each other, whereas said first and fourth magnets are designed to mutually repel each other when said first and second members (7, 9) are brought into correspondence with each other.

7. A system (1) according to any one of claims 1 and 2, **characterized in that** the first and second (7, 9) are designed so that said cooperation are of mechanical nature.

8. A system (1) according to any one of claims 1 to 7, **characterized in that** the pattern (2) comprises a plurality of elements (2A) removably attached to a transfer film forming the transfer means.

9. A system (1) according to claim 8, **characterized in that** it comprises a device (17) for making the transfer film (4A) run opposite the substrate (3).

10. A system (1) according to any one of claims 1 to 9, **characterized in that** the pressing means (5) comprises a pad (5A).

11. A system (1) according to any one of claims 1 to 10, **characterized in that** the substrate (3) comprises a via! (3A), preferably made of glass, whereas the pattern (2) comprises a plurality of beads, preferably made of glass.

12. A method for manufacturing a substrate (3) onto which is affixed a pattern (2) at a unique predetermined location, said method comprising, on the one hand, a step of making or providing a transfer means (4) to which said pattern (2) to be affixed is removably attached, and on the other hand, a step of pressing, against the substrate (3), the transfer means (4) and the pattern (2) attached to the latter, said step of pressing being carried out using the pressing means (4), said method being **characterized in that** it comprises a step of making a means (6) for aiding in the positioning of the pattern (2) at said unique predetermined location on the substrate (3), step during which a first and a second members (7, 9) forming said positioning aiding means are respectively mounted integral with the substrate (3) or with the pressing means (5) on the one hand, and with the transfer means (4) on the other hand, said first and second members (7, 9) being designed in such a manner that a cooperation is established between them when they are brought in correspondence with each other, preventing them from moving away from each other, the method also comprising, before the step of pressing, a step of bringing the first and second members (7, 9) into correspondence with each other so that said cooperation between them is established.

13. A method according to claim 12, **characterized in that** the first and second members (7, 9) are designed so that said cooperation consists in a magnetic attraction.

14. A method according to claim 12 or 13, **characterized in that** the substrate (3) comprises a vial (3A), preferably made of glass, whereas the pattern (2) comprises a plurality of beads, preferably made of glass.

15. A transfer sub-assembly (40) for affixing a pattern (2) onto a substrate (3), said transfer sub-assembly (40) comprising a transfer means (4) to which said pattern (2) is removably attached and being **characterized in that** it comprises a second member (9) mounted directly integral with the transfer means (4), said second member (9) comprising a magnet or a ferromagnetic element and being a part of a means (6) for aiding in the positioning of the pattern (2) relative to the substrate (3), said aiding means (6) further comprising a first member (7) mounted integral either with a support (8) receiving the substrate (3), or with a pressing means (5) for pressing against the substrate (3) the transfer means (4) and the pattern (2) attached to the latter, wherein said first and second members (7, 9) can be brought into correspondence with each other, said first and second members (7, 9) being designed in such a manner that a cooperation is established between them when they are brought into correspondence with each other, preventing them from moving away from each other.
